# FASCICULE DE BREVET EUROPEEN

(11) **EP 3 807 547 B1**
(45) Date de publication et mention de la délivrance du brevet: **24.05.2023**
(21) Numéro de dépôt: 19753165.0
(22) Date de dépôt: 16.07.2019
(51) Int. Cl.: F16C 11/06, B29C 65/00, B29C 43/14, B29C 69/00, B29C 65/50, B29C 43/18, B29L 31/30, H01Q 1/12

(54) **PIÈCE DE LIAISON THERMODURCISSABLE PARTIELLEMENT POLYMÉRISÉE ET PROCÉDÉS DE FABRICATION ET D'ASSEMBLAGE D'UNE TELLE PIÈCE DE LIAISON**
TEILWEISE POLYMERISIERTES WÄRMEHÄRTBARES VERBINDUNGSTEIL UND VERFAHREN ZUR HERSTELLUNG UND MONTAGE EINES SOLCHEN VERBINDUNGSTEILS
PARTIALLY POLYMERISED THERMOHARDENABLE CONNECTION PART AND METHODS FOR PRODUCING AND ASSEMBLING SUCH A CONNECTION PART

(30) Priorité: 19.07.2018 FR 1800780
(43) Date de publication de la demande: 21.04.2021
(73) Titulaire: ArianeGroup SAS, 78130 Les Mureaux (FR)
(72) Inventeur: CAVALIERE, Frédérick, 78180 Montigny-le-Bretonneux (FR); LEBORGNE, Florian, 78180 Montigny-le-Bretronneux (FR); BOIL, Fabrice, 95220 Herblay (FR)
(74) Mandataire: Brevalex
(86) Numéro de dépôt international: PCT/FR2019/051777
(87) Numéro de publication internationale: WO 2020/016516

(56) Documents cités:
- WO-A1-2008/071657
- FR-A1- 3 001 408
- FR-A1- 3 023 210
- US-A1- 2017 210 188

## Description

### DOMAINE TECHNIQUE

La présente invention concerne une pièce de liaison en matériau composite, destinée à réaliser une liaison entre une première pièce mécanique et une seconde pièce mécanique, et des procédés de fabrication et d'assemblage d'une telle pièce de liaison.

### ÉTAT DE LA TECHNIQUE

Une telle pièce de liaison en matériau composite est destinée à être utilisée dans tout domaine, notamment spatial et aéronautique mais non exclusivement, nécessitant une opération d'assemblage structural avec au moins une pièce (ou structure) mécanique présentant une forme variable au niveau de l'interface de liaison.

Bien que non exclusivement, la présente invention s'applique plus particulièrement à un réflecteur d'antenne de satellite, par exemple de télécommunication. Un tel réflecteur d'antenne comprend, généralement, une structure rigide en matériau composite (appelée coque) pourvue d'une surface réflectrice (qui est réfléchissante pour des ondes radiofréquence) et une structure de renfort à l'arrière de cette surface également en matériau composite, qui participe au maintien de la coque et à la liaison avec le satellite.

Dans l'application à une telle structure spatiale, lors de la réalisation du réflecteur d'antenne, la coque du réflecteur, légère et de forme complexe, doit être assemblée avec la structure (de renfort) arrière par l'intermédiaire de plusieurs pièces de liaison. Généralement, ces pièces de liaison sont en matériau composite. En général, chacune de ces pièces de liaison présente une forme de cornière, et elle doit être adaptée notamment à l'interface du côté de la coque et également du côté de la structure arrière. Pour la fixation de ces pièces de liaison, un collage est réalisé à froid en essayant de générer le moins de contrainte possible lors de l'assemblage, afin de ne pas induire de déformation de la coque.

Ainsi, chacune de ces pièces de liaison (de type cornière) doit être adaptée notamment à l'interface avec la coque, ce qui demande un grand nombre de pièces, beaucoup de temps pour le choix de la pièce adéquate ainsi que pour l'opération d'assemblage par collage à température ambiante.

Il existe donc un besoin de simplification de l'opération d'assemblage d'une pièce de liaison de ce type, tout en conservant une grande fiabilité de la liaison réalisée. WO2008/071657 A1 , FR3023210 A1 et FR3001408 A1 divulguent des procédés de fabrication de pièces composites par moulage par compression, comprenant au moins une étape de drapage dans un moule avec un matériau non imprégné et non durci, et une étape de polymérisation partielle dudit matériau.

### EXPOSÉ DE L'INVENTION

La présente invention a pour but de proposer une solution permettant notamment de simplifier la mise en oeuvre d'une liaison entre deux pièces mécaniques. Elle concerne une pièce de liaison en matériau composite, destinée à réaliser une liaison entre une première pièce mécanique et une seconde pièce mécanique.

Selon l'invention, ladite pièce de liaison en matériau composite est thermodurcissable, et elle est partiellement polymérisée de manière à être rigide à température ambiante et apte à être soumise à une polymérisation ultérieure finale.

Une pièce thermodurcissable est une pièce réalisée en matière plastique qui, sous l'action de la chaleur, se durcit progressivement pour atteindre un état solide irréversible.

En outre, la polymérisation désigne la réaction chimique par laquelle de petites molécules réagissent entre elles pour former des molécules de masses molaires plus élevées. Les molécules initiales sont des monomères (ou des prépolymères), la synthèse conduisant à des polymères. En général, en présence de réactifs et de catalyseurs, et sous l'action de la chaleur et de la pression, il se forme des chaînes macromoléculaires constituées de motifs de répétition identiques ou différents, liés de façon covalente. On obtient ainsi des polymères, de masses molaires éventuellement élevées, issus de la polymérisation de monomères.

Dans le cadre de la présente invention, on entend par « partiellement polymérisé » (ou « polymérisation partielle ») le fait que la pièce de liaison a été soumise à un processus de polymérisation ayant généré une modification du matériau de ladite pièce de liaison, qui est devenu suffisamment rigide à température ambiante pour pouvoir être manipulé, mais dont la polymérisation n'est pas complètement achevée pour obtenir un polymère avec les propriétés correspondantes. Avantageusement, le taux de polymérisation partielle est compris entre 20% et 75%, et plus particulièrement entre 25% et 60%. Ce matériau devra être soumis, lors de la fixation (ou assemblage) à une pièce mécanique, à une polymérisation supplémentaire, pour être complètement polymérisé et devenir un polymère.

Ainsi, grâce à l'invention, on obtient une pièce de liaison qui, à la fois :
- est suffisamment rigide à température ambiante pour pouvoir être manipulée et être amenée au contact d'au moins l'une des deux pièces mécaniques qu'elle doit lier ensemble ; et
- doit être soumise à une polymérisation supplémentaire ultérieure pour se trouver dans son état polymérisé final. Au cours de cette polymérisation ultérieure, le matériau de la pièce de liaison, rigide à température ambiante à l'état partiellement polymérisé, est rendu suffisamment mou lors de la montée en température pour pouvoir s'adapter à la forme de la ou des pièces mécaniques auxquelles la pièce de liaison doit être liée.

Il est ainsi possible de fabriquer des pièces de liaison standard (partiellement polymérisées), qui peuvent être adaptées lors d'un assemblage ultérieur (via une polymérisation finale) à la forme variable de la ou des pièces mécaniques associées.

On est ainsi en mesure de standardiser ce type de pièce de liaison, ce qui permet de diminuer les coûts de réalisation et de faciliter l'assemblage, tout en conservant (ou en améliorant) la tenue mécanique et la fiabilité des liaisons réalisées. L'amélioration est due à un collage à chaud plutôt qu'un collage usuel réalisé à température ambiante.

Avantageusement, la pièce de liaison est pourvue, à une première extrémité destinée à la liaison à la première pièce mécanique, d'une surface sensiblement plane.

En outre, de façon avantageuse, la pièce de liaison est pourvue, à une seconde extrémité destinée à la liaison à la seconde pièce mécanique, d'un logement. De préférence, elle comporte également une rotule qui est agencée dans le logement.

Par ailleurs, dans un mode de réalisation particulier, la pièce de liaison est pourvue au moins d'un élément métallique rapporté dans une paroi du logement. Cet élément métallique intégré dans la pièce lors de la fabrication peut correspondre à un insert taraudé en vue d'un assemblage par vis.

En outre, dans un mode de réalisation particulier, la pièce de liaison est pourvue d'éléments métalliques ou composites polymérisés rapportés sur des parois internes du logement afin de maintenir la géométrie du logement lors de la polymérisation finale.

La présente invention concerne également un procédé de fabrication d'une pièce de liaison telle que celle spécifiée ci-dessus.

Selon l'invention, ledit procédé de fabrication est un procédé de moulage par compression, et il comporte au moins :
- une étape de drapage dans un moule avec du matériau pré-imprégné non polymérisé ; et
- une étape de polymérisation partielle, sous pression et en température, dudit matériau.

Avantageusement, l'étape de polymérisation partielle est mise en oeuvre pour réaliser une polymérisation partielle du matériau avec un taux de polymérisation partielle compris en 20% et 75%, c'est-à-dire que le matériau est polymérisé (partiellement) entre 20% et 75%. De préférence, le taux de polymérisation partielle est compris entre 25% et 60%.

Dans un mode de réalisation particulier, ledit procédé de fabrication comporte, de plus, au moins l'une des étapes suivantes :
- avant l'étape de drapage, une étape de positionnement d'éléments (ou d'inserts) métalliques dans le moule ; et
- entre l'étape de drapage et l'étape de polymérisation partielle, une étape d'intégration d'un tissu à délaminer (ou tissu de délaminage ou tissu d'arrachage) pouvant servir de protection de la surface qui sera à l'interface de collage. Ce tissu sera à peler juste avant l'assemblage.

La présente invention concerne, en outre, un procédé d'assemblage d'une pièce de liaison telle que celle spécifiée ci-dessus.

Selon l'invention, ledit procédé d'assemblage comporte au moins une étape de polymérisation finale de la pièce de liaison (partiellement polymérisée) qui est amenée au contact au moins de l'une desdites pièces mécaniques.

Avantageusement, ledit procédé d'assemblage comporte de plus :
- avant l'étape de polymérisation finale de la pièce de liaison, une étape de conformation avec chauffe locale de la pièce de liaison amenée au contact au moins de l'une desdites pièces mécaniques, de préférence à l'aide d'un outil chauffant portatif ; et/ou
- une étape d'ajout d'un film adhésif à l'interface avec ladite pièce mécanique ; et/ou
- une étape de mise en place d'une rotule (dans le logement de la pièce de liaison) et d'assemblage de la rotule à une pièce mécanique, suivie d'une étape de collage de la rotule dans son logement une fois sa position réglée.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 est une vue schématique, en coupe, d'une pièce de liaison selon un mode de réalisation particulier, qui lie ensemble deux pièces mécaniques ;
- les figures 2 à 5 illustrent schématiquement, en coupe, de manière non exhaustive, différents modes de réalisation de la pièce de liaison ;
- les figures 6A, 6B et 7 à 9 illustrent schématiquement, en coupe, de manière non exhaustive, différents modes de réalisation de la pièce de liaison pourvue d'une rotule ;
- les figures 10 et 11 illustrent schématiquement, en coupe, deux situations successives lors de l'assemblage de la pièce de liaison à une pièce mécanique ;
- les figures 12 et 13 présentent schématiquement les étapes principales, respectivement, d'un procédé de fabrication et d'un procédé d'assemblage d'une pièce de liaison ; et
- les figures 14A à 14F montrent schématiquement différentes formes possibles pour une partie de support de la pièce de liaison, vue de dessus.

### DESCRIPTION DÉTAILLÉE

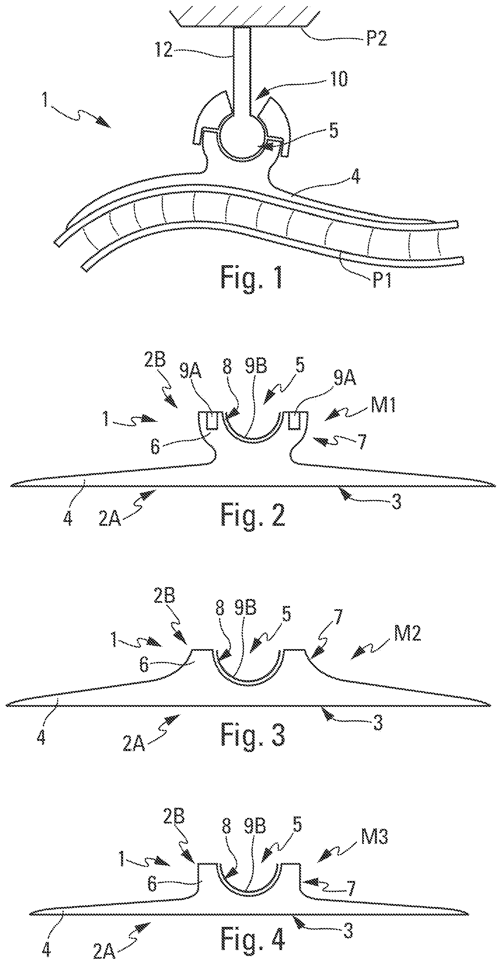

La pièce de liaison 1 représentée schématiquement dans un mode de réalisation particulier sur la figure 1, est destinée à réaliser une liaison entre deux pièces mécaniques P1 et P2 distinctes.

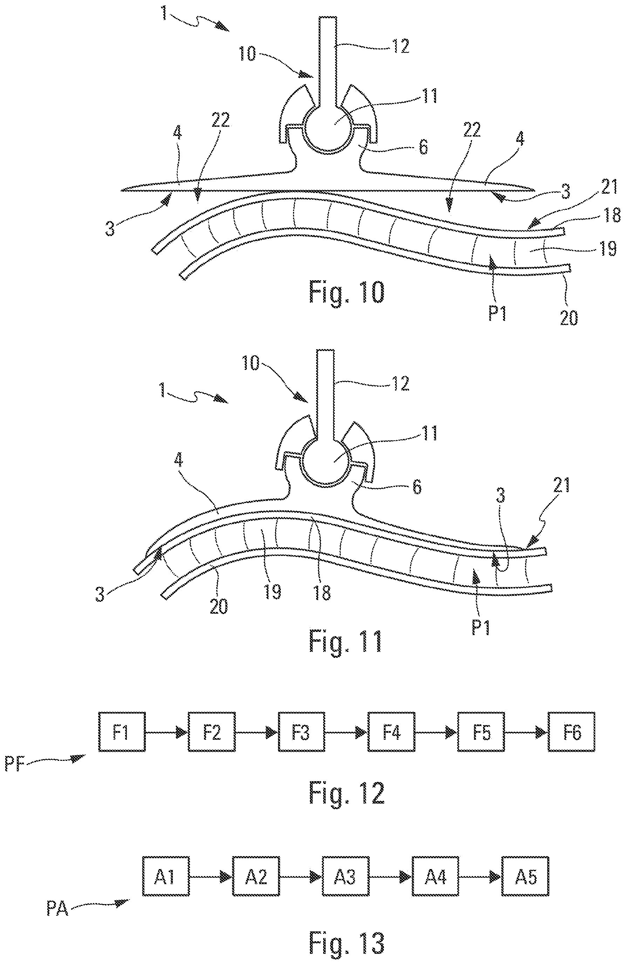

Dans l'exemple représenté sur la figure 1, la pièce mécanique P1 comprend une structure sandwich composite. Cette structure sandwich comporte, par exemple, une âme en nid-d'abeilles, de part et d'autre de laquelle sont apposées des peaux, comme précisé ci-dessous en référence aux figures 10 et 11. Chacune des peaux peut être pourvue d'un ou de plusieurs plis de matériau composite avec, par exemple, des fibres de carbone.

La pièce de liaison 1 est en matériau composite.

De plus, selon l'invention, ladite pièce de liaison 1 est thermodurcissable, et elle est partiellement polymérisée de manière à être, d'une part, rigide à température ambiante, dans les états des figures 2 à 5 notamment, et d'autre part, apte à être soumise à une polymérisation ultérieure finale.

Dans le cadre de la présente invention, on entend par « partiellement polymérisé » (ou « polymérisation partielle ») le fait que la pièce de liaison 1 ait été soumise à un procédé de polymérisation (ou procédé de fabrication décrit ci-après) ayant généré une modification du matériau de ladite pièce de liaison 1, qui est devenu suffisamment rigide à température ambiante pour pouvoir être manipulé, mais dont la polymérisation n'est pas complètement achevée pour obtenir un polymère avec les propriétés correspondantes. Le taux de polymérisation partielle est compris entre 20% et 75%, et plus particulièrement entre 25% et 60%.

Ce matériau devra être soumis lors de la fixation ou l'assemblage (à au moins l'une des pièces mécaniques P1 et P2) à une polymérisation supplémentaire (lors d'un procédé d'assemblage décrit ci-après), pour être complètement polymérisé et former, de manière irréversible, un réseau tridimensionnel.

Par conséquent, la pièce de liaison 1 est, à la fois :
- suffisamment rigide à température ambiante pour pouvoir être manipulée et être amenée au contact d'au moins l'une des deux pièces mécaniques (qu'elle doit lier ensemble) ; et
- apte à être soumise à une polymérisation supplémentaire ultérieure, pour être amenée dans son état polymérisé final. Au cours de cette polymérisation ultérieure, avant d'atteindre le niveau de polymérisation finale, le matériau de la pièce de liaison 1 (qui est rigide à température ambiante à l'état partiellement polymérisé) est rendu suffisamment mou lors de la montée en température pour pouvoir s'adapter à la forme de la ou des pièces mécaniques auxquelles la pièce de liaison 1 doit être liée, et notamment à la forme de la pièce mécanique P1.

Il est ainsi possible de fabriquer des pièces de liaison 1 standard (partiellement polymérisées), qui peuvent être adaptées lors d'un assemblage ultérieur (via une polymérisation finale) à la forme de la ou des pièces mécaniques associées. La standardisation des pièces de liaison 1 permet de diminuer les coûts de réalisation et de faciliter l'assemblage, tout en conservant (ou en améliorant) la tenue mécanique et la fiabilité des liaisons réalisées.

Dans un mode de réalisation préféré, représenté sur les figures 2 à 5, la pièce de liaison 1 est pourvue, à une première extrémité 2A destinée à la liaison à une première des pièces mécaniques, par exemple à la pièce mécanique P1 de la figure 1, d'une partie de support 4 (ou base) pourvue d'une surface 3 sensiblement plane.

Cette surface 3 plane peut ultérieurement être adaptée à des surfaces de formes différentes de la pièce mécanique P1 (en passant par un état ramolli lors d'une polymérisation finale).

En outre, dans un mode de réalisation particulier, la pièce de liaison 1 est pourvue, à une seconde extrémité 2B qui est opposée à l'extrémité 2A et qui est destinée à la liaison à la seconde pièce mécanique, par exemple à la pièce mécanique P2 de la figure 1, d'un logement 5 pourvu d'une paroi 6.

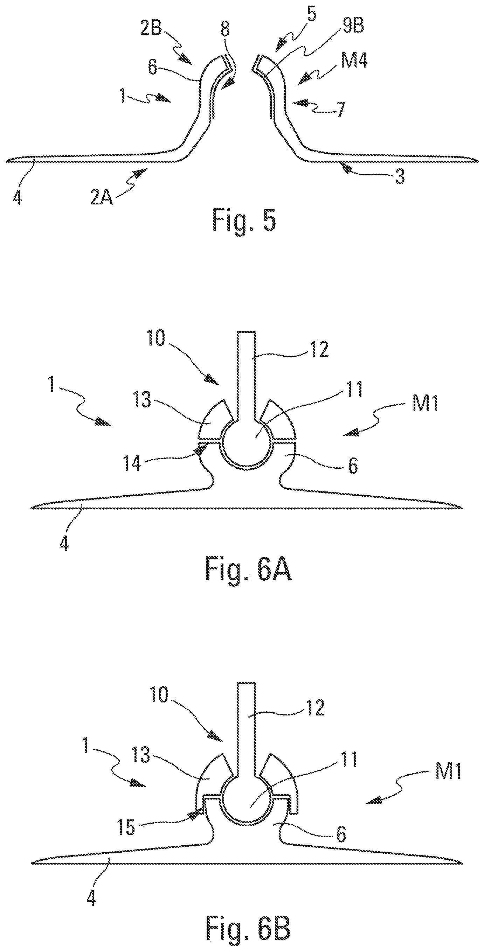

Les modes de réalisation M1 à M4 des figures 2 à 5 diffèrent entre eux par la forme du logement 5 et/ou de la paroi 6 dudit logement 5. La paroi 6 peut présenter des bords externes 7 de formes différentes, par exemple arrondie (figures 2 et 3), rectiligne (figure 4), ou plus complexe (figure 5).

De même, la paroi 6 peut présenter des bords internes 8 de formes différentes, avec de préférence au moins une partie sensiblement hémisphérique.

Par ailleurs, dans un mode de réalisation particulier, la pièce de liaison 1 est pourvue d'un ou de plusieurs éléments 9A métalliques (ou en un autre matériau, par exemple composite) qui sont rapportés dans la paroi 6 du logement 5, comme représenté sur la figure 2, et/ou d'un ou de plusieurs éléments 9B métalliques (ou en un autre matériau, par exemple composite) qui sont rapportés sur la surface des parois internes du logement, comme représenté sur les figures 2 à 5. Les éléments 9B rapportés sur la surface interne ont pour fonction de maintenir la géométrie interne du logement afin de pouvoir positionner une rotule lors d'une opération ultérieure. La pièce de liaison peut également comporter, notamment au niveau de la paroi 6, des perçages ou des évidements (non représentés).

Dans les modes de réalisation préférés, représentés sur les figures 6A à 9, la pièce de liaison 1 est muni d'une rotule 10 qui est agencée dans le logement 5.

La rotule 10 comprend une partie sphérique 11 destinée à être insérée dans le logement 5 et une tige 12 solidaire de la partie sphérique 11.

La pièce de liaison 1 est liée à l'une des pièces mécaniques par l'intermédiaire de la tige 12 de la rotule 10, comme représenté sur la figure 1 pour la pièce mécanique P2. La tige 12 peut être métallique ou composite et elle peut être filetée.

La pièce de liaison 1 comprend également un élément de maintien 13 (ou partie supérieure du logement) qui est fixé sur la paroi 6 (après la mise en place de la rotule 10), pour former un logement 5 sphérique, destiné à enserrer la partie sphérique 11 de la rotule 10.

La pièce de liaison 1 comprend ainsi un logement 5 pour pouvoir positionner une fixation avec une rotule 10, afin de permettre des réglages de l'assemblage à une pièce mécanique P2, après un assemblage de la pièce de liaison 1 à la pièce mécanique P1. Cette possibilité de réglage est due à la possibilité d'orienter la tige 12 de la rotule 10 (fixée à la pièce mécanique P1), en faisant tourner la partie sphérique 11 de la rotule 10 dans le logement 5. Lorsque la position est réglée, la rotule 10 peut être fixée dans le logement 5, par exemple par collage à température ambiante.

Les figures 6A et 6B montrent deux exemples différents de collage d'un élément de maintien 13 sur la paroi 6, respectivement avec un contact plan 14 et avec un rebord 15, pour le mode de réalisation M1 de la figure 2 (sans élément métallique 9A).

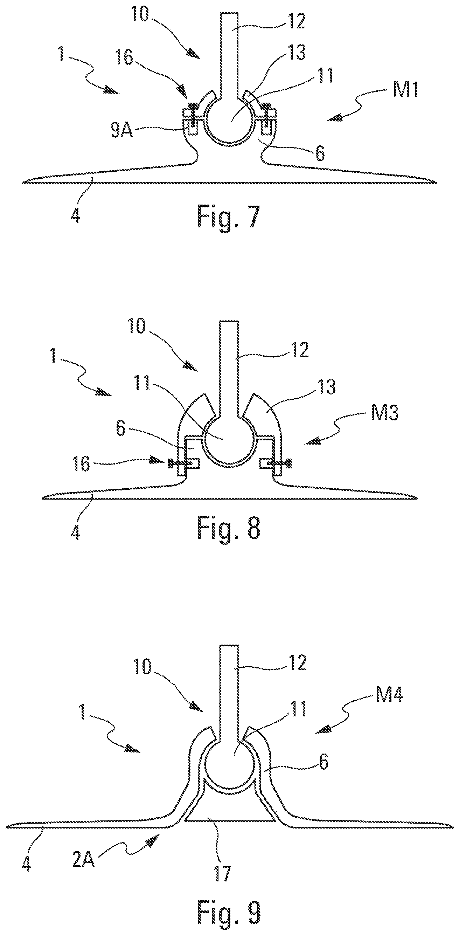

Les figures 7 et 8 montrent deux exemples différents de fixation d'un élément de maintien 13 sur la paroi 6 par l'intermédiaire d'éléments de fixation 16 tels que des vis par exemple, qui sont par exemple associés à des éléments métalliques 9A taraudés rapportés dans la paroi 6 lors du drapage des pièces, respectivement pour les modes de réalisation M1 et M3 des figures 2 et 4.

Par ailleurs, dans l'exemple de la figure 9 correspondant au mode de réalisation M4 de la figure 5, un bouchon 17 en matériau composite pré-polymérisé est ajouté après insertion de la rotule 10 entre l'extrémité 2A de la pièce de liaison 1 et la partie sphérique 11 de la rotule 10. Ce bouchon 17 vient fermer le logement de la rotule avant assemblage de la pièce de liaison 1 et polymérisation finale. Des éléments (ou pièces) métalliques ou composites complètement polymérisés peuvent être rapportés sur les surfaces internes du logement afin de maintenir une bonne géométrie de ce logement lors de la polymérisation finale de l'assemblage. Un film adhésif peut être rapporté à l'interface entre la pièce 2A et le bouchon 17 lors du positionnement de ce bouchon 17.

La pièce de liaison 1, telle que décrite ci-dessus, peut être utilisée dans tout domaine, notamment spatial et aéronautique mais non exclusivement, qui nécessite une opération d'assemblage structural avec au moins une pièce (ou structure) mécanique présentant une forme variable au niveau de l'interface de liaison.

Plus particulièrement, la pièce de liaison 1 peut être une pièce spatiale en matériau composite, notamment une pièce de type « pad », permettant la jonction avec la coque d'un réflecteur d'antenne d'un satellite, présentant une forme variable au niveau de l'interface d'assemblage. De façon usuelle, un réflecteur d'antenne d'un satellite comprend une coque pourvue d'une surface dite avant, qui est apte à réfléchir des ondes électromagnétiques, et un système de renfort qui est agencé sur une surface dite arrière, qui est opposée à la surface avant. Ce système de renfort comprend une structure principale dite structure arrière, ainsi que d'autres éléments et moyens usuels permettant notamment de fixer le réflecteur sur le satellite considéré. Le système de renfort a pour but de maintenir la coque et d'assurer la liaison de la coque au satellite. Dans un mode de réalisation préféré, la coque du réflecteur comprend une structure sandwich composite. Cette structure sandwich P1 comprend, par exemple, une âme 19 en nid-d'abeilles, qui est transparente aux ondes radioélectriques, et sur laquelle sont apposées une peau avant 20 et une peau arrière 18, comme représenté sur les figures 10 et 11. Chacune des peaux 18 et 20 comprend un ou plusieurs plis de matériau composite avec, par exemple, des fibres de carbone. Le matériau constituant la peau avant 20 (c'est-à-dire la surface avant réfléchissante) de la coque doit permettre de garantir une réflexion des ondes électromagnétiques. L'utilisation de pièces de liaison 1 (telles que celle décrite ci-dessus) pour la fixation de la coque permet, notamment, de minimiser le nombre de pièces de liaison 1 et de simplifier leur positionnement sur la coque.

La pièce de liaison 1, telle que décrite ci-dessus, peut être fabriquée à partir d'un procédé de fabrication PF représenté sur la figure 12.

Ce procédé de fabrication PF est un procédé de moulage par compression. Ledit procédé de fabrication PF comporte au moins :
- une étape F2 de drapage dans un moule (de forme adaptée) utilisé pour le moulage par compression, avec du matériau pré-imprégné non polymérisé. Le matériau peut être une nappe constituée de fibres unidirectionnelles et/ou du tissu, avec des fibres de carbone, de verre, ou de kevlar par exemple ; et
- une étape F5 de polymérisation partielle dudit matériau.

L'étape F5 consiste à appliquer un cycle de polymérisation partielle pression/température adapté au matériau pré-imprégné utilisé, avec une presse à plateaux chauffants et/ou un moule chauffant.

Le procédé de moulage par compression permet d'obtenir des pièces à côtes finies avec une possibilité de positionnement d'éléments rapportés (ou inserts) métalliques et des perçages dès la phase de fabrication.

Ledit procédé de fabrication PF peut comporter, de plus, au moins l'une des étapes suivantes :
- avant l'étape F2 de drapage, une étape F1 d'intégration dans le moule, d'éléments métalliques 9A, 9B tels que ceux représentés par exemple sur la figure 2 ;
- entre l'étape F2 de drapage et l'étape F5 de polymérisation partielle, une éventuelle étape F3 d'intégration d'un tissu à délaminer (ou de délaminage ou d'arrachage, à savoir « peel-ply » en anglais). Cette étape F3 permet d'intégrer un tissu à délaminer, sec ou pré-imprégné, notamment aux emplacements des interfaces de collage qui sont à réaliser ultérieurement.

Le procédé PF comporte également, entre l'étape F2 ou F3 et l'étape F5, une étape F4 de fermeture du moule et de positionnement du moule sous presse.

Le procédé PF comprend finalement une étape F6 de démoulage de la pièce de liaison 1, sans enlever, le cas échéant, le tissu à délaminer afin de protéger les surfaces jusqu'à la phase de collage (ou d'assemblage). Ce tissu sera à peler juste avant l'opération de collage.

Concernant le matériau utilisé, le monomère de base de la résine époxy est, de préférence, principalement de type DGEBA (pour « DiGlycidyl Ether of Bisphenol A » en anglais), TGPAP (pour « TriGlycidylParaAminoPhenol »), ou TGMDA (pour « TetraGlycidyl MethyleneDiAniline »). Le durcisseur est de type amine, par exemple de type DDS (pour « DiaminoDiphenyl Sulfone »).

Dans une première variante de réalisation dudit procédé de fabrication PF, pour une application à un procédé de drapage dans un moule ouvert, on prévoit :
- une fois le drapage du pré-imprégné terminé, avec ou sans tissu à délaminer, une étape de mise en place des produits d'environnement et de la bâche à vide habituellement employés. Les produits d'environnement peuvent inclure un conformateur (ou tôle de lissage) sous la bâche à vide ;
- une étape de polymérisation partielle du stratifié en autoclave ou en étuve ; et
- une étape de démoulage de la pièce de liaison sans enlever le tissu à délaminer, afin de protéger la surface de la pièce de liaison jusqu'à l'opération de collage (lors de l'assemblage).

Dans cette première variante du procédé de fabrication PF, on ne prévoit généralement pas d'éléments rapportés et/ou de trous dès la phase de drapage. De plus, la pièce de liaison obtenue ne présente pas de côtes finies et nécessite généralement un ébavurage et/ou un détourage.

En outre, dans une seconde variante dudit procédé de fabrication PF, pour une application à un procédé d'injection, on prévoit :
- une étape de placement de la préforme sèche constituée de nappes ou de tissus secs dans l'outillage, avec ou sans tissu à délaminer, avant la fermeture du moule ou de la bâche à vide. Les fibres de la préforme sèche peuvent être, par exemple, des fibres de carbone, de verre, ou de kevlar ;
- une étape d'injection de la résine jusqu'à imprégnation totale de la préforme fibreuse, suivie d'une polymérisation partielle ; et
- une étape de démoulage de la pièce de liaison, sans enlever le tissu à délaminer, afin de protéger la surface de la pièce de liaison jusqu'à l'opération de collage (lors de l'assemblage).

La pièce de liaison 1, telle que décrite ci-dessus et telle que fabriquée par exemple par le procédé de fabrication PF décrit ci-dessus, est assemblée à au moins l'une des pièces mécaniques et de préférence aux deux pièces mécaniques P1 et P2, à l'aide d'un procédé d'assemblage PA représenté sur la figure 13.

Ce procédé d'assemblage PA comporte au moins une étape A4 de polymérisation finale de la pièce de liaison 1 qui est amenée, à cet effet, au contact au moins de l'une desdites pièces mécaniques, en particulier de la pièce mécanique P1 dans l'exemple des figures 10 et 11.

Ledit procédé d'assemblage PA comporte, de plus, les étapes suivantes :
- une étape A1 de pelage (ou enlèvement) du tissu à délaminer (en cas de présence d'un tel tissu), et de préparation de surface (dégraissage) avant le positionnement de la pièce de liaison 1 sur la pièce mécanique P1 à l'emplacement du collage, comme représenté sur la figure 10. Plusieurs pièces de liaison 1 peuvent être positionnées sur une seule et même pièce mécanique P1. Une fois la pièce de liaison 1 positionnée sur la pièce mécanique P1, comme la surface 3 (de préférence plane) de la partie de support 4 de la pièce de liaison 1 et la surface 21 (de forme quelconque) de la pièce mécanique P1 en contact sont généralement différentes, elles présentent un jeu 22 pouvant être important avec un entrefer variable, comme montré sur la figure 10 ;
- une étape A3 de mise en place de produits d'environnement adéquats (dont des produits de protection de zones sensibles de la pièce), et d'une bâche à vide usuelle ; et
- l'étape A4 de polymérisation finale jusqu'à polymérisation complète, en autoclave ou en étuve, de l'assemblage (à savoir la pièce de liaison, la pièce mécanique et un éventuel adhésif à l'interface). Lors de la montée en température, la résine de la pièce de liaison 1, partiellement polymérisée, redevient suffisamment fluide (en raison d'une baisse de viscosité) pour permettre à la pièce de liaison 1 de s'adapter ou se conformer (sans contrainte) exactement à la forme de la surface 21 de la pièce mécanique P1, comme représenté sur la figure 11.

Par ailleurs :
- si la pièce mécanique P1 sur laquelle doit être collée la pièce de liaison 1 est complètement polymérisée, on prévoit une étape A2 avec une opération préliminaire de préparation de la surface 21 de la pièce mécanique P1, à l'emplacement du collage (dégraissage, ponçage, nettoyage), suivie d'une opération d'ajout d'un film d'adhésif ; et
- si la pièce mécanique P1 sur laquelle doit être collée la pièce de liaison 1 est non polymérisée (voire partiellement polymérisée), l'opération de collage s'apparente à de la cocuisson. Il n'est pas nécessaire de réaliser une préparation de surface préliminaire de la pièce mécanique P1 à l'emplacement du collage (ou juste un dégraissage dans le cas d'une pièce P1 partiellement polymérisée). De plus, l'ajout d'un film d'adhésif à l'interface est optionnel dans ce cas.

En outre, le procédé d'assemblage peut comprendre, avant l'étape A4 de polymérisation finale, une étape de conformation avec chauffe locale au moins de l'une des pièces de liaison 1 amenée au contact de la pièce mécanique P1, par exemple à l'aide d'un outil chauffant portatif. Cette étape peut permettre de simplifier le maintien de la pièce de liaison 1, ainsi que de simplifier la pose des produits d'environnement avant la polymérisation finale et donc la qualité finale de l'assemblage polymérisé.

L'assemblage obtenu présente une zone de collage à chaud avec une épaisseur d'adhésif maîtrisée, une bonne tenue mécanique et une bonne fiabilité du collage du fait de la cocuisson.

Le cas échéant, l'opération d'assemblage de la rotule 10 sur la pièce de liaison 1 peut être réalisée à deux moments différents, à savoir avant ou après l'assemblage avec la pièce mécanique P1.

Lorsque l'opération d'assemblage est réalisée avant l'assemblage avec la pièce mécanique P1, on met en oeuvre les actions suivantes :
- positionnement de la rotule 10 dans le logement 5 ;
- placement de l'élément de maintien 13 représentant la deuxième partie du logement 5. Si cette pièce additionnelle (élément de maintien 13) est complètement polymérisée, il est notamment envisageable de positionner un adhésif entre la pièce de liaison 1 et cet élément de maintien 13 ;
- placement de la pièce de liaison 1 équipée de la rotule 10 sur la pièce mécanique P1 (comme sur la figure 9), avec ou sans adhésif à l'interface, et polymérisation de l'assemblage ; et
- une fois les réglages de la position de la rotule 10 fixés, collage à température ambiante de la rotule 10 dans son logement 5.

En outre, lorsque l'opération d'assemblage de la rotule 10 est réalisée après l'assemblage avec la pièce mécanique P1 (comme sur les figures 6A à 8), on met en oeuvre les actions suivantes :
- enlèvement des protections de la géométrie du logement 5 de la rotule 10 ayant servi lors de la polymérisation finale ;
- placement de la rotule 10 et de l'élément de maintien 13 au niveau du logement 5. Il est envisageable de fixer et/ou de coller à température ambiante l'élément de maintien 13 sur la paroi 6 du logement 5 ; et
- une fois les réglages de la position de la rotule 10 fixés, collage à température ambiante de la rotule 10 dans son logement 5.

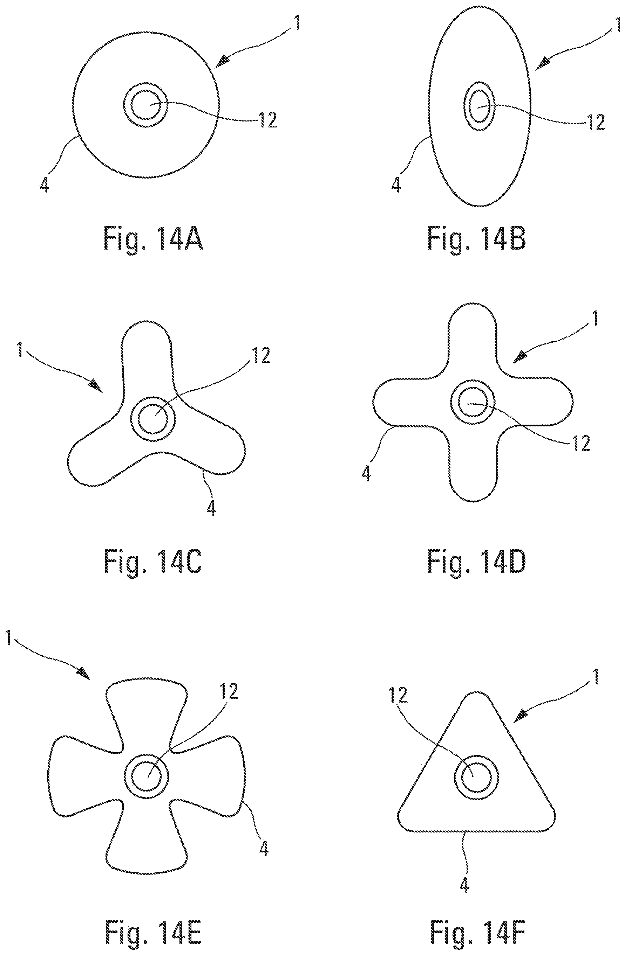

Pour faciliter la liaison de la pièce de liaison 1 avec une pièce mécanique, comme dans l'exemple des figures 10 et 11, la partie de support 4 peut présenter des formes variées. Les figures 14A à 14F montrent, à titre d'illustration, différentes formes possibles pour la partie de support 4 (ou base) de la pièce de liaison 1, vue de dessus. Ces formes peuvent, par exemple être ronde (figure 14A), elliptique (figure 14B), avec différentes branches (figures 14C à 14E), ou triangulaire (figures 14F).

La présente invention présente de nombreux avantages. En particulier, elle permet :
- l'obtention de pièces de liaison 1 standardisées, qui sont stockables et manipulables à température ambiante ;
- l'assemblage à chaud de toutes les pièces de liaison 1 avec une ou des pièces mécaniques, notamment en une seule opération ;
- l'adaptation de chaque pièce de liaison 1 à la forme de l'interface, lors de la polymérisation finale ; et
- l'obtention d'une liaison collée équivalente à une liaison par cocuisson (en cas d'assemblage avec une structure (ou pièce mécanique) non polymérisée ou partiellement polymérisée).

A titre d'illustration, pour l'application précitée à une coque de réflecteur d'antenne de satellite, l'assemblage des pièces de liaison est réalisé au cours du drapage de la coque. Les pièces de liaison sont positionnées sur la coque quelle que soit la forme de l'interface, avec ou sans film adhésif à l'interface. Lors de la polymérisation finale de l'assemblage, la résine des pièces de liaison, partiellement polymérisée, se ramollit suffisamment pour permettre aux pièces de liaison de se conformer exactement à la forme de la coque, sans induire de contraintes mécaniques sur la coque, tout en assurant une bonne tenue mécanique de la liaison à l'interface.

## Revendications

1. Pièce de liaison en matériau composite, destinée à réaliser une liaison entre une première pièce mécanique (P1) et une seconde pièce mécanique (P2), ladite pièce de liaison (1) étant thermodurcissable et partiellement polymérisée de manière à être rigide à température ambiante et apte à être soumise à une polymérisation ultérieure finale, ladite pièce de liaison (1) étant pourvue, à une seconde extrémité (2B) destinée à la liaison à la seconde pièce mécanique (P2), d'un logement (5),
**caractérisée en ce qu'**elle comporte une rotule (10) agencée dans le logement (5).

2. Pièce de liaison selon la revendication 1,
**caractérisée en ce qu'**elle est pourvue, à une première extrémité (2A) destinée à la liaison à la première pièce mécanique (P1), d'une surface (3) sensiblement plane.

3. Pièce de liaison selon l'une des revendications 1 et 2,
**caractérisée en ce qu'**elle est pourvue au moins d'un élément métallique (9A) rapporté dans une paroi (6) du logement (5).

4. Pièce de liaison selon l'une des revendications 1 à 3,
**caractérisée en ce qu'**elle est pourvue d'éléments métalliques ou composites polymérisés (9B) rapportés sur des parois (6) internes du logement (5) afin de maintenir la géométrie du logement (5) lors de la polymérisation finale.

5. Pièce de liaison selon l'une quelconque des revendications précédentes, **caractérisée en ce qu'**elle est partiellement polymérisée avec un taux de polymérisation partielle compris en 20% et 75%, et plus particulièrement entre 25% et 60%.

6. Procédé de fabrication d'une pièce de liaison selon l'une quelconque des revendications 1 à 5, ledit procédé de fabrication étant un procédé (PF) de moulage par compression, et comprenant au moins :
- une étape (F2) de drapage dans un moule avec du matériau pré-imprégné non polymérisé ; et
- une étape (F5) de polymérisation partielle dudit matériau,
**caractérisé en ce qu'**il comporte, de plus, entre l'étape (F2) de drapage et l'étape (F5) de polymérisation partielle, une étape d'intégration d'un tissu à délaminer.

7. Procédé de fabrication selon la revendication 6,
**caractérisé en ce qu'**il comporte, de plus, avant l'étape (F2) de drapage, une étape (F1) de positionnement d'éléments métalliques (9A, 9B) dans le moule.

8. Procédé d'assemblage d'une pièce de liaison selon l'une quelconque des revendications 1 à 5, ledit procédé d'assemblage (PA) comprenant au moins une étape (A4) de polymérisation finale de la pièce de liaison (1) amenée au contact au moins de l'une (P1) desdites pièces mécaniques (P1, P2),
**caractérisé en ce qu'**il comporte une étape de mise en place d'une rotule (10).

9. Procédé d'assemblage selon la revendication 8,
**caractérisé en ce qu'**il comprend avant l'étape (A4) de polymérisation finale de la pièce de liaison (1), une étape de conformation avec chauffe locale de la pièce de liaison (1) amenée au contact au moins de l'une desdites pièces mécaniques (P1, P2).

10. Procédé d'assemblage selon l'une des revendications 8 et 9,
**caractérisé en ce qu'**il comporte une étape (A2) d'ajout d'un film adhésif sur la pièce mécanique (P1).

## Patentansprüche

1. Verbindungsstück aus Verbundmaterial, das dazu bestimmt ist, eine Verbindung zwischen einem ersten mechanischen Teil (P1) und einem zweiten mechanischen Teil (P2) herzustellen, wobei das Verbindungsstück (1) wärmehärtbar und teilweise polymerisiert ist, so dass es bei Umgebungstemperatur steif ist und geeignet ist, einer abschließenden späteren Polymerisation unterzogen zu werden, wobei das Verbindungsstück (1) an einem zweiten Ende (2B), das zur Verbindung mit dem zweiten mechanischen Teil (P2) bestimmt ist, mit einer Aufnahme (5) versehen ist,
**dadurch gekennzeichnet, dass** es ein Kugelgelenk (10) aufweist, das in dem Gehäuse (5) angeordnet ist.

2. Verbindungsstück nach Anspruch 1,
**dadurch gekennzeichnet, dass** es an einem ersten Ende (2A), das zur Verbindung mit dem ersten mechanischen Teil (P1) bestimmt ist, mit einer im Wesentlichen ebenen Oberfläche (3) versehen ist.

3. Verbindungsstück nach einem der Ansprüche 1 oder 2,
**dadurch gekennzeichnet, dass** es mit mindestens einem Metallelement (9A) versehen ist, das in eine Wand (6) des Gehäuses (5) eingesetzt ist.

4. Verbindungsstück nach einem der Ansprüche 1 bis 3,
**dadurch gekennzeichnet, dass** es mit polymerisierten Metall- oder Verbundelementen (9B) versehen ist, die an Innenwänden (6) des Gehäuses (5) angesetzt sind, um die Geometrie des Gehäuses (5) bei der abschließenden Polymerisation beizubehalten.

5. Verbindungsstück nach einem der vorhergehenden Ansprüche,
**dadurch gekennzeichnet, dass** es mit einem Teilpolymerisationsgrad zwischen 20% und 75%, insbesondere zwischen 25% und 60%, teilpolymerisiert ist.

6. Verfahren zur Herstellung eines Verbindungsteils nach einem der Ansprüche 1 bis 5, wobei das Herstellungsverfahren ein Formpressverfahren (PF) ist und mindestens aufweist:
- einen Schritt (F2) des Drapierens in einer Form mit nicht polymerisiertem vorimprägniertem Material; und
- einen Schritt (F5) der teilweisen Polymerisation des genannten Materials, **dadurch gekennzeichnet, dass** es außerdem zwischen dem Schritt (F2) des Drapierens und dem Schritt (F5) der partiellen Polymerisation einen Schritt der Integration eines zu delaminierenden Gewebes aufweist.

7. Herstellungsverfahren nach Anspruch 6,
**dadurch gekennzeichnet, dass** es außerdem vor dem Schritt (F2) des Drapierens einen Schritt (F1) des Positionierens von Metallelementen (9A, 9B) in der Form enthält.

8. Verfahren zum Zusammenbau eines Verbindungsteils nach einem der Ansprüche 1 bis 5, wobei das Zusammenbauverfahren (PA) mindestens einen Schritt (A4) der Endpolymerisation des Verbindungsteils (1) aufweist, das in Kontakt mit mindestens einem (P1) der mechanischen Teile (P1, P2) gebracht wurde,
**dadurch gekennzeichnet, dass** es einen Schritt des Anbringens eines Kugelgelenks (10) aufweist.

9. Verfahren zum Zusammenbau nach Anspruch 8,
**dadurch gekennzeichnet, dass** es vor dem Schritt (A4) der endgültigen Polymerisation des Verbindungsstücks (1) einen Schritt der Formgebung mit lokaler Erwärmung des Verbindungsstücks (1) aufweist, das in Kontakt mit mindestens einem der mechanischen Teile (P1, P2) gebracht wird.

10. Verfahren zum Zusammenbau nach einem der Ansprüche 8 und 9,
**dadurch gekennzeichnet, dass** es einen Schritt (A2) aufweist, bei dem ein Klebefilm auf dem mechanischen Teil (P1) hinzugefügt wird.

## Claims

1. Connection part made of composite material, intended to create a connection between a first mechanical part (P1) and a second mechanical part (P2), said connection part (1) being thermohardenable and partially polymerised in such a way as to be rigid at ambient temperature and capable of being subjected to a final later polymerisation, said connection part (1) being provided, at a second end (2B) intended for the connection to the second mechanical part (P2), with a housing (5), **characterised in that** it includes a ball (10) mounted in the housing (5).

2. Connection part according to claim 1,
**characterised in that** it is provided, at a first end (2A) intended for the connection to the first mechanical part (P1), with a substantially flat surface (3).

3. Connection part according to one of claims 1 and 2,
**characterised in that** it is provided at least with a metal element (9A) mounted in a wall (6) of the housing (5).

4. Connection part according to one of claims 1 to 3,
**characterised in that** it is provided with metal or polymerised composite elements (9B) mounted on inner walls (6) of the housing (5) in order to maintain the geometry of the housing (5) during the final polymerisation.

5. Connection part according to any one of the previous claims,
**characterised in that** it is partially polymerised with a partial polymerisation rate between 20% and 75%, and more particularly between 25% and 60%.

6. Method for producing a connection part according to any one of claims 1 to 5, said production method being a method (PF) for compression moulding, and comprising at least:
- a step (F2) of drape forming in a mould with non-polymerised pre-impregnated material; and
- a step (F5) of partial polymerisation of said material,
**characterised in that** it also includes, between the step (F2) of drape forming and the step (F5) of partial polymerisation, a step of integrating a fabric to be delaminated.

7. Production method according to claim 6,
**characterised in that** also includes, before the step (F2) of drape forming, a step (F1) of positioning metal elements (9A, 9B) in the mould.

8. Method for assembling a connection part according to any one of claims 1 to 5, said assembly method (PA) comprising at least one step (A4) of final polymerisation of the connection part (1) brought into contact at least with one (P1) of said mechanical parts (P1, P2),
**characterised in that** it includes a step of positioning a ball (10).

9. Assembly method according to claim 8,
**characterised in that** it comprises, before the step (A4) of final polymerisation of the connection part (1), a step of conforming with local heating of the connection part (1) brought into contact at least with one of said mechanical parts (P1, P2).

10. Assembly method according to one of claims 8 and 9,
**characterised in that** it includes a step (A2) of adding an adhesive film onto the mechanical part (P1).
